# EUROPEAN PATENT SPECIFICATION

(11) **EP 0 361 801 B1**
(45) Date of publication and mention of the grant of the patent: **07.07.1993**
(21) Application number: 89309660.2
(22) Date of filing: 22.09.1989
(51) Int. Cl.: H04B 1/44, H01P 1/15, H04B 1/48

(54) **A microwave semiconductor switch**
Halbleiterschalter für Mikrowellen
Interrupteur à semi-conducteur pour micro-ondes

(30) Priority: 30.09.1988 JP 247606/88
(43) Date of publication of application: 04.04.1990
(73) Proprietor: MITSUBISHI DENKI KABUSHIKI KAISHA, Tokyo (JP)
(72) Inventor: Kadowaki, Yoshinobu c/o Mitsubishi Denki K.K., Itami-shi Hyogo-ken (JP); Yoshii, Yutaka c/o Mitsubishi Denki K.K., Itami-shi Hyogo-ken (JP)
(74) Representative: Beresford, Keith Denis Lewis

(56) References cited:
- WO-A-87/04012
- US-A- 3 475 700
- US-A- 4 701 724
- Patent Abstracts of Japan, vol. 8, no. 217 (E-270)(1654), 4th October 1984 & JP-A-59 101 934
- Patent Abstracts of Japan, vol. 9, no. 75 (E-306)(1798), 4th April 1985 & JP-A-59 210 702
- Patent Abstracts of Japan, vol. 10, no. 11 (E-374)(2068), 17th January 1986 & JP-A-60 174 534
- Patent Abstracts of Japan, vol. 2, no. 6 (E-77)(9982), 17th January 1978 & JP-A-52 120 741

## Description

The present invention relates to a microwave transmit-receive switch, and more particularly to an improvement in a circuit construction of a transmit-receive switch (hereinafter referred to as "TR" switch) in microwave frequency band.

### BACKGROUND OF THE INVENTION

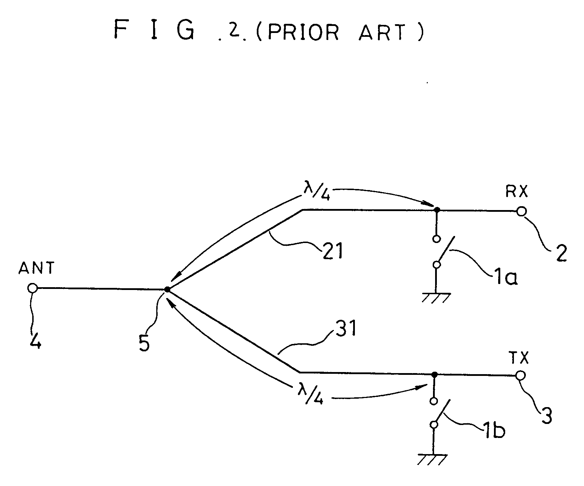

Figure 2 shows a circuit construction of a prior art microwave transmit-receive switch.

In figure 2, the microwave transmit-receive switch includes semiconductor switching elements 1a and 1b such as diode or transistor, a receiving terminal and transmission terminal 2 and 3, a common signal terminal 4 connected with an antenna, and quarter wavelength transmission lines 21 and 31 connecting the switching elements 1a and 1b and the branching point 5 where the line branches from the antenna terminal 4 to the transmission terminal 3 and the receiving terminal 2.

The device will operate as follows.

When a signal from the antenna terminal 4 is to be received, the switching element 1b connected with the transmission terminal 3 is closed and the switching element 1a connected with the receiving terminal 2 is opened. In this state, since the switching element 1b is closed, the characteristic impedance of the transmission line viewed from the branching point 5 toward the transmission terminal 3 becomes an opened state, and the signal flows into the receiving terminal 2.

On the other hand, when a signal is transmitted from the transmission terminal 3, the switching element 1a connected with the receiving terminal 2 is closed and the switching element 1b connected with the transmission terminal 3 is opened. Then, the characteristic impedance of the transmission line viewed from the branching point 5 toward the receiving terminal 2 becomes an opened state, and a transmission signal is sent out to the antenna terminal 4.

Generally, a transmission signal is a high power signal and the power thereof amounts to about 100 times as that of low power receiving signal. That is, the transmission signal becomes a high power signal of about 10 to 20 W. Therefore, in handling such high power signal, the switching element 1b is required to have electrical characteristics of high breakdown voltage in its opened state in the microwave transmit-receive switch of the prior art construction. In realizing high breakdown voltage in a switching semiconductor element, however, there is a restriction in the production technique, and further the element size has inevitably increased. This has further resulted in a problem in case of constituting a microwave transmit-receive switch in a monolithic microwave integrated circuit (hereinafter referred to as "MMIC"), which has been noticed recently, that the cost inevitably should increase due to the increase in the area of MMIC chip, accompanied with the restriction in view of the power handling capability and the increase in the size of the switch element. In addition, in such a microwave circuit, even when the switching elements 1a and 1b are closed, it is not possible to completely make the switching elements short-circuited. That is, even though the characteristics impedances of the quarter wavelength phase delay lines 21 and 31 are 50Ω, the high frequency resistances which arise in the switching elements 1a and 1b are added thereto, and therefore the impedance matching between the quarter wavelength phase delay lines 21 and 31 and the respective terminals cannot be obtained due to the inductance components of the switching elements. Furthermore, in order to improve these impedance matching and obtain a desired impedance, it is required to provide matching circuits in accordance with the signal frequency and this has resulted in a complicated circuit.

There is disclosed in JP-A-59-101934 an arrangement in which an antenna and a transmitter are coupled to respective terminals of a 3 dB directional coupler, the coupling terminals of which are connected to the coupling terminals of a second 3dB coupler through power limiters. A receive terminal and a power dummy are connected to the second directional coupler. The power limiters prevent transmission of the greater part of the signal from the transmitter, so that this is reflected back to the antenna, thereby reducing the tendency of the transmitted signal to pass to the receiver. A low level of transmitted signal, passed by the power limiters, is output to the power dummy where it is absorbed. A received signal at the antenna is of sufficiently low power that it passes through the power limiters to the receiver.

JP-A-59-210702 discloses a high frequency high electric power switching circuit in which an antenna and a transmit terminal are connected to a first directional coupler, and the coupling terminals of the first directional coupler are connected to the coupling terminals of a second directional coupler. A receive terminal and a resistive earth connection are connected to the second directional coupler. PIN diodes act as switches through which high frequency signals at the coupling terminals of the directional couplers may be grounded. In operation, the diodes ground the high frequency signals during transmit, so that signals from the transmit terminal pass to the antenna, and the receive terminal is uncoupled. For receive, the diodes do not couple the high frequency signals to ground, so that signals from the antenna are coupled to the receive terminal, and the transmit terminal is uncoupled.

### SUMMARY OF THE INVENTION

It is an object of the present invention to provide a microwave transmit-receive switch capable of being constructed easily, and having a large power handling capability while transmitting a high power signal.

According to the present invention there is provided a microwave transmit-receive switch as set out in claim 1. Preferred and optional features are set out in claims 2 to 5. In the present invention the switching elements can be provided to be open during receiving and closed during transmission, thereby facilitating transmission of high power signals.

A specific embodiment of the present invention, given by way of illustration only, will now be described with reference to the accompanying drawings.

### BRIEF DESCRIPTION OF THE DRAWINGS

Figure 1 is a diagram showing a circuit construction of a microwave transmit-receive switch according to an embodiment of the present invention;
Figure 2 is a diagram showing a circuit construction of a microwave transmit-receive switch according to the prior art.

### DETAILED DESCRIPTION OF THE PREFERRED EMBODIMENTS

An embodiment of the present invention will be described in detail with reference to the drawings.

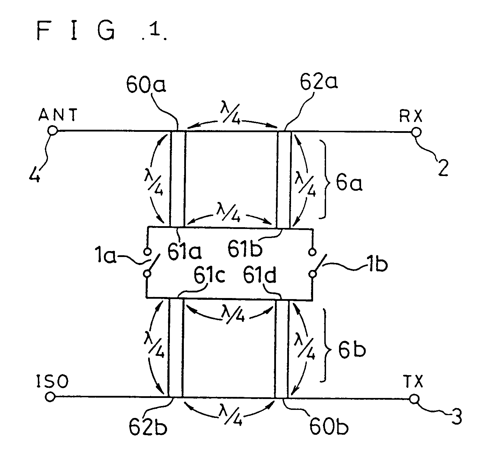

Figure 1 shows a circuit construction of a microwave transmit-receive switch according to an embodiment of the present invention. In Figure 1, the transmit-receive switch includes switching elements 1a and 1b such as diodes or transistors, a receiving terminal and transmission terminal 2 and 3, an antenna terminal 4, and first and second 3 dB directional couplers 6a, 6b.

The directional coupler 6a has an input terminal 60a, isolation terminal 62a, and coupling terminals 61a and 61b, and the directional coupler 6b has an input terminal 60b, isolation terminal 62b, and coupling terminals 61c and 61d.

The directional couplers 6a and 6b are 3dB directional couplers and the switching elements 1a and 1b are connected between the coupling terminals 61a and 61c and between the coupling terminals 61b and 61d, respectively. The input terminal 60a of the directional coupler 6a is made a common antenna terminal 4 of the TR switch and the isolation terminal 62a of the directional coupler 6a is made the receiving terminal 2 of the TR switch. The input terminal 60b of the directional coupler 6b which is connected with the directional coupler 6a via the switching elements 1a and 1b is made a transmission terminal 3 from which a synthesized signal is output and the isolation terminal 62b of the directional coupler 6b is made an isolation terminal ISO of the TR switch.

The device will operate as follows.

When the switching elements 1a and 1b which are connected between the coupling terminals 61a and 61c and between 61b and 61d of the two directional couplers 6a and 6b, respectively, are opened, the input signal from the antenna terminal 4 is divided into two by the characteristics of the 3 dB directional coupler 6a and the divided signals flow toward the coupling terminals 61a and 61b. Then, since the switching elements 1a and 1b are in open states, the signals are perfectly reflected and reach the receiving terminal 2.

On the other hand, at the transmission, the signal sent out from the transmission terminal 3 is divided into 1 : 1 by the directional coupler 6b and the divided signals flow toward the coupling terminals 61c and 61d. Herein, when the switching elements 1a and 1b are closed, the signals pass through the switching elements 1a and 1b and are synthesized by the directional coupler 6a, and they reach the common antenna terminal 4.

In this microwave TR switch, the switching elements 1a and 1b are made in open states in processing a low power receiving signal and made in closed states in processing a high power transmission signal. Accordingly, at the transmission, the switching elements 1a and 1b become to have low impedance of about several ohms and currents flow therethrough without a high voltage being applied. Therefore, it is not required for the switching elements 1a and 1b to have a high breakdown voltage.

The microwave TR switch of this embodiment has a balanced construction utilizing directional couplers.

Therefore, if the characteristic impedances of the switching elements 1a and 1b are equal to each other, the characteristic impedances of the transmission lines viewed from the antenna terminal 4 and the transmission terminal 3 are determined by only the characteristics of the directional couplers 6a, 6b regardless whether the characteristic impedances of the switching elements are equal to that of the directional couplers 6a, 6b or not. Accordingly, the impedance matching of the antenna terminal 4 and the transmission terminal 3 are improved dependent on the characteristics of the directional couplers 6a and 6b.

Accordingly, in the present embodiment the microwave semiconductor switch is constituted by two directional couplers aid a plurality of switching elements, and the input signal terminal of a directional coupler is made a common antenna terminal of the switching signal, the isolation terminal thereof is made a receiving signal terminal, a switching element is connected between the coupling terminal thereof and the coupling terminal of the other directional coupler, and the input terminal of the other directional coupler is made a transmission signal terminal. Thus, the switching elements connected between the coupling terminals of the directional couplers are opened at the receiving and those are closed at transmission, thereby enabling transmission of power.

## Claims

1. A microwave transmit-receive switch for switching transmission and reception of microwave signals, comprising:
first and second directional couplers (6a, 6b);
a common terminal (4) for microwave signals connected with an input terminal (60a) of said first directional coupler (6a);
a receiving terminal (2) for microwave signals connected with an isolation terminal (62a) of said first directional coupler (6a);
switching elements (1a, 1b) provided between the coupling terminals (61a, 61b) of said first directional coupler (6a) and those (61c, 61d) of said second directional coupler (6b), respectively;
a transmission terminal (3) for microwave signals connected with the input terminal (60b) of said second directional coupler (6b); and
the switching elements (1a, 1b) being switchable between a first state in which they connect the coupling terminals (61a, 61b) of the first directional coupler (6a) with the coupling terminals (61c, 61d) of the second directional coupler (6b), and a second state in which they isolate the coupling terminals (61a, 61b) of the first directional coupler (6a) from the coupling terminals (61c, 61d) of the second directional coupler (6b).

2. A microwave transmit-receive switch according to claim 1, in which both said directional couplers (6a, 6b) are 3 dB directional couplers.

3. A microwave transmit-receive switch according to claim 1 or claim 2, in which the switching elements (1a,1b) comprise transistors.

4. A microwave transmit-receive switch according to claim 1 or claim 2, in which the switching elements (1a,1b) comprise diodes.

5. A microwave transmit-receive switch according to any one of the preceding claims, which is constituted as a microwave monolithic integrated circuit.

## Patentansprüche

1. Mikrowellen-Sende/Empfang-Schalter für das Schalten des Sendens und Empfangens von Mikrowellensignalen, der
einen ersten und einen zweiten Richtungskoppler (6a, 6b),
einen mit einem Eingangsanschluß (60a) des ersten Richtungskopplers (6a) verbundenen gemeinsamen Anschluß (4) für Mikrowellensignale,
einen mit einem Trennanschluß (62a) des ersten Richtungskopplers (6a) verbundenen Empfangsanschluß (2) für Mikrowellensignale,
jeweils zwischen den Koppelanschlüssen (61a, 61b) des ersten Richtungskopplers (6a) und denjenigen (61c, 61d) des zweiten Richtungskopplers (6b) angebrachte Schaltelemente (1a, 1b) und einen mit dem Eingangsanschluß (60b) des zweiten Richtungskopplers (6b) verbundenen Sendeanschluß (3) enthält, wobei
die Schaltelemente (1a, 1b) zwischen einem ersten Zustand, bei dem sie die Koppelanschlüsse (61a, 61b) des ersten Richtungskopplers (6a) mit den Koppelanschlüssen (61c, 61d) des zweiten Richtungskopplers (6b) verbinden, und einem zweiten Zustand schaltbar sind, bei dem sie die Koppelanschlüsse (61a, 61b) des ersten Richtungskopplers (6a) von den Koppelanschlüssen (61c, 61d) des zweiten Richtungskopplers (6b) trennen.

2. Mikrowellen-Sende/Empfang-Schalter nach Anspruch 1, in dem die beiden Richtungskoppler (6a, 6b) 3dB-Richtungskoppler sind.

3. Mikrowellen-Sende/Empfang-Schalter nach Anspruch 1 oder Anspruch 2, in dem die Schaltelemente (1a, 1b) Transistoren enthalten.

4. Mikrowellen-Sende/Empfang-Schalter nach Anspruch 1 oder nach Anspruch 2, in dem die Schaltelemente (1a, 1b) Dioden enthalten.

5. Mikrowellen-Sende/Empfang-Schalter nach einem der vorangehenden Ansprüche, der als monolitische integrierte Mikrowellen-Schaltung gestaltet ist.

## Revendications

1. Un commutateur d'émission-réception micro-onde pour commuter l'émission et la réception de signaux micro-ondes, comprenant :
des premier et second coupleurs directionnels (6a, 6b) ;
une borne commune (4) pour des signaux micro-ondes, connectée à une borne d'entrée (60a) du premier coupleur directionnel (6a) ;
une borne de réception (2) pour des signaux micro-ondes, connectée à une borne d'isolation (62a) du premier coupleur directionnel (6a) ;
des éléments de commutation (1a, 1b) placés respectivement entre les bornes de couplage (61a, 61b) du premier coupleur directionnel (6a), et celles (61c, 61d) du second coupleur directionnel (6b) ;
une borne d'émission (3) pour des signaux micro-ondes, connectée à la borne d'entrée (60b) du second coupleur directionnel (6b) ; et
les éléments de commutation (1a, 1b) pouvant être commutés entre un premier état dans lequel ils connectent les bornes de couplage (61a, 61b) du premier coupleur directionnel (6a) et les bornes de couplage (61c, 61d) du second coupleur directionnel (6b), et un second état dans lequel ils isolent les bornes de couplage (61a, 61b) du premier coupleur directionnel (6a) vis-à-vis des bornes de couplage (61c, 61d) du second coupleur directionnel (6b).

2. Un commutateur d'émission-réception micro-onde selon la revendication 1, dans lequel les deux coupleurs directionnels (6a, 6b) sont des coupleurs directionnels à 3 dB.

3. Un commutateur d'émission-réception à micro-onde selon la revendication 1 ou la revendication 2, dans lequel les éléments de commutation (1a, 1b) comprennent des transistors.

4. Un commutateur d'émission-réception micro-onde selon la revendication 1 ou la revendication 2, dans lequel les éléments de commutation (1a, 1b) comprennent des diodes.

5. Un commutateur d'émission-réception micro-onde selon l'une quelconque des revendications précédentes, réalisé sous la forme d'un circuit intégré micro-onde monolithique.
